# NEUE EUROPÄISCHE PATENTSCHRIFT

(11) **EP 0 464 054 B2**
(45) Veröffentlichungstag und Bekanntmachung des Hinweises auf die Entscheidung über den Einspruch: **07.10.1998**
(45) Hinweis auf die Patenterteilung: 08.09.1993
(21) Anmeldenummer: 90904590.8
(22) Anmeldetag: 21.03.1990
(51) Int. Cl.: B60N 2/28, B60R 22/10

(54) **KINDER-SICHERHEITSSITZ**
CHILD'S SAFETY SEAT
SIEGE DE SECURITE POUR ENFANT

(30) Priorität: 23.03.1989 DE 3909650
(43) Veröffentlichungstag der Anmeldung: 08.01.1992
(73) Patentinhaber: AUTOFLUG GMBH & CO FAHRZEUGTECHNIK, D-25462 Rellingen (DE)
(72) Erfinder: MAURER, Petra, D-2359 Henstedt-Ulzburg (DE); SCHMIDT, Peter, D-2056 Glinde (DE)
(74) Vertreter: Müller, Karl-Ernst, Dr., Dipl.-Ing.
(86) Internationale Anmeldenummer: DE9000218
(87) Internationale Veröffentlichungsnummer: WO9011203

(56) Entgegenhaltungen:
- EP-A- 164 909
- DE-A- 2 205 859
- DE-A- 3 422 695
- DE-A- 3 505 009
- DE-A- 3 634 501
- DE-U- 8 705 942
- FR-A- 2 274 468

## Beschreibung

Die Erfindung betrifft einen Kinder-Sicherheitssitz zur Verankerung an einem aus Beckengurt und Schultergurt bestehenden Sicherheitsgurtsystem in Kraftfahrzeugen, mit einem mit dem Beckengurt des Sicherheitsgurtes zu halternden Untergestell und mit einer damit verbundenen Sitzschale, die einen integrierten Sicherheitsgurt zur Sicherung des Kindes aufweist, und mit einem am Fußende der Sitzschale angeordneten, im wesentlichen vertikal aufstehenden Bügel, der zur Anlage an der Rückenlehne des Fahrzeugsitzes eingerichtet ist und an dessen Fuß sitzflächenseitig der Beckengurt das Untergestell hält.

Ein gattungsgemäßer Kinder-Sicherheitssitz ist in dem DE-GM 87 05 942 beschrieben; bei dem einstückig mit einem Untergestell und einer Sitzschale ausgebildeten Kindersitz sind die Standkufen des Untergestells in ihren in Einbaustellung des Kindersitzes in Fahrtrichtung des Kraftfahrzeuges weisenden Hinterenden in einen vertikal angeordneten Bügel verlängert, der bei eingebautem Kindersitz an der Rückenlehne des Kraftfahrzeuges zu Anlage kommt. Der Bügel hat im wesentlichen eine Prallfunktion.

In dem Übergangsbereich zwischen den Standkufen und dem Bügel ist eine Führung für den Beckengurt vorgesehen, mit dem der Kinder-Sicherheitssitz auch alleine gesichert werden kann. Soweit zusätzlich eine Sicherung durch den Schultergurt des fahrzeugseitigen Sicherheitsgurtsystems vorgesehen ist, verläuft dieser außen um die Sitzschale des Kindersitzes herum durch eine außen an der Rückenlehne der Sitzschale vorgesehene Führung. Mit dieser bekannten Anordnung ist im wesentlichen der Nachteil verbunden, daß die Sicherung des Kindersitzes unter Einbeziehung des Schultergurtes des fahrzeugseitigen Sicherheitsgurtsystems umständlich ist und die Handhabung des Kindersitzes beim Hineinstellen und Herausnehmen aus dem Kraftfahrzeug erschwert.

Der Erfindung liegt daher die Aufgabe zugrunde, einen gattungsgemäßen Kindersitz derart weiterzubilden, daß die Handhabung des Kindersitzes wie auch der Teile des Sicherheitsgurtes beim Anschnallen und Ablegen des Sicherheitsgurtsystems am Kindersitz verbessert und die Sicherheit der Rückhaltung des Kindersitzes am Fahrzeugsitz erhöht ist.

Die Lösung dieser Aufgabe ergibt sich einschließlich vorteilhafter Ausgestaltungen und Weiterbildungen aus dem Inhalt der Patentansprüche, welche dieser Beschreibung nachgestellt sind.

Die Erfindung sieht dabei in ihrem Grundgedanken vor, daß der Bügel oberhalb des Schwerpunktes der Sitzschale ein eine Führung für den Schultergurt ausbildendes Bauteil aufweist, wobei die Führung für den Schultergurt an dem Bauteil um ein Maß von dem Bügel in Richtung auf die Sitzschale beabstandet ist.

Hiermit ist der Vorteil verbunden, daß aufgrund der am Fußende des Kindersitzes ubereinander angeordneten Halterung bzw. Führung für den Beckengurt wie auch für den Schultergurt des Sicherheitsgurtsystems die Gurtgeometrie bei der Rückhaltung des Kindersitzes der Gurtgeometrie beim Anschnallen einer aufrechtsitzenden Person im Fahrzeug entspricht. Insofern ist das Anlegen wie auch das Ablegen des Sicherheitsgurtes beim Einsetzen und beim Herausnehmen des Kindersitzes sehr vereinfacht. Weiterhin ergibt sich der Vorteil, daß nur wenig Gurtbandlänge zur Halterung des Kindersitzes an dem Fahrzeugsitz benötigt wird, so daß die vorhandenen fahrzeugseitigen Gurte der Länge nach jeweils ausreichend sind. Da der Schwerpunkt der Schultergurtführung oberhalb des Schwerpunktes der Sitzschale, vorzugsweise oberhalb des Schwerpunktes der aus Sitzschale und Kind bestehenden Einheit bei der Beförderung eines Kindes, liegt, kann es bei auf den Kindersitz einwirkenden Beschleunigungen auch nicht zu Kippbewegungen des Kindersitzes um seine Gurtbandhalterung kommen. Ein weiterer Vorteil ist darin zu sehen, daß aufgrund der am Bügel eingerichteten Gurtführungen für sowohl den Beckengurt als auch den Schultergurt die Sitzschale frei ist von übergreifenden bzw. umgreifenden Teilen des Sicherheitsgurtsystems, so daß eine gute Zugänglichkeit zu der Sitzschale im Hinblick auf die Beförderung eines Kindes gegeben ist.

Da die Führung für den Schultergurt von dem in etwa im rechten Winkel von dem Grundrahmen des Untergestells hochragenden Bügel um ein Maß in Richtung auf die Sitzschale beabstandet ist, ergibt sich eine vorteilhafte Gurtspannung und Gurtgeometrie in Anpassung an verschiedene Fahrzeuggeometrien.

Bei beispielsweise in der DE 35 05 009 A1 beschriebenen Kindersitzen mit einer durch in Fahrtrichtung des Kraftfahrzeuges ausgerichteten Blickrichtung des in dem Kindersitz sitzenden Kindes gekennzeichneten erwachsenengleichen Sitzposition ist es bekannt, an dem an der Rückenlehne des Fahrzeugsitzes anliegenden und die Sitzschale abstützenden aufstehenden Bügel des Untergestells eine Führung für den Schultergurt auszubilden, die unmittelbar über den an der Rückenlehne anliegenden Bügel verläuft und diesen hält. Das Problem einer guten Zugänglichkeit der Sitzschale aber stellt sich bei derartigen Kindersitzen nicht.

Nach einer bevorzugten Ausführungsform der Erfindung ist vorgesehen, den gewünschten Abstand zwischen der Schultergurtführung und dem Bügel dadurch herzustellen, daß an dem Bügel ein Kasten befestigt ist, wobei die Schultergurtführung in vorteilhafter Weise an der sitzschalenseitigen Fläche des Kastens angeordnet ist. Dieser Kasten bietet die Möglichkeit, eine Ablagefläche oder einen zusätzlichen Aufbewahrungsraum für Utensilien zu schaffen, wodurch die Handhabung des Kindersitzes weiterhin verbessert ist.

Die Erfindung erstreckt sich darauf, einen einstückig aus Untergestell und Sitzschale bestehenden Kindersitz mittels der erfindungsgemäßen Sicherheitsgurtführung an dem Bügel zu haltern.

Die Erfindung erstreckt sich aber ebenfalls darauf, den Kindersitz mit einer von dem Untergestell abnehmbaren Sitzschale auszugestalten, wobei zur Verbindung von Untergestell und Sitzschale eine Verriegelungseinrichtung vorgesehen ist; der Bügel zur Halterung sowohl des Becken- sowie auch des Schultergurtes ist an dem Untergestell angeformt, so daß zunächst nur das Untergestell mittels des Sicherheitsgurtes im Fahrzeug gehaltert ist und dort verbleiben kann, so daß nur die Sitzschale aus dem Fahrzeug herausgenommen bzw, in das Fahrzeug eingestellt und mit dem Untergestell verriegelt zu werden braucht.

In der Zeichnung ist ein Ausführungsbeispiel der Erfindung wiedergegeben, welches nachstehend beschrieben ist. Es zeigen:
- Fig. 1: einen Kinder-Sicherheitssitz mit Untergestell und Sitzschale in schaubildlicher Darstellung,
- Fig. 2: einen Kinder-Sicherheitssitz mit Untergestell und darin lösbar angeordneter Sitzschale in einer Seitenansicht.

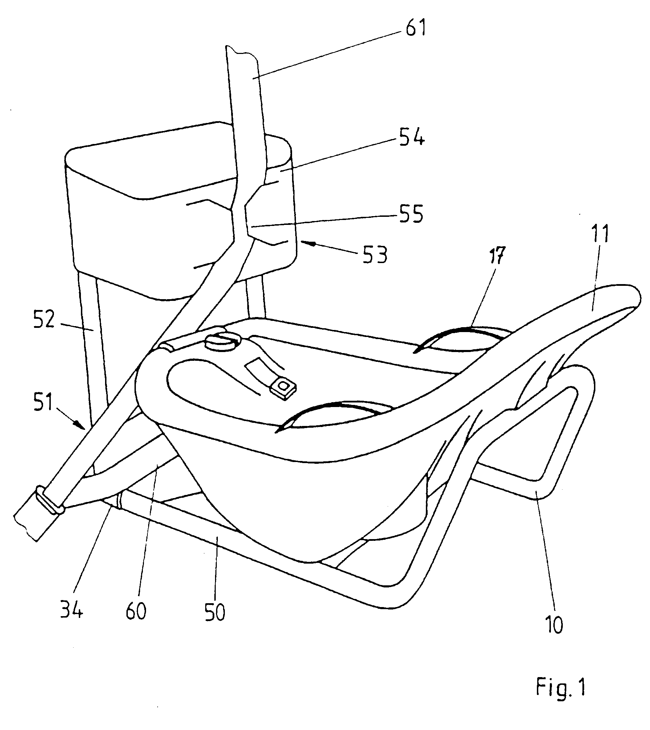

Gemäß Figur 1 weist zur Führung der Teile des Sicherheitsgurtes das Untergestell 10 eines Kinder-Sicherheitssitzes einen von seinem Grundrahmen 50 im Bereich seines Fußteiles 51 senkrecht hochstehenden Bügel 52 auf, der in etwa einen parallelen Verlauf zu einer nicht dargestellten Rückenlehne eines gleichermaßen nicht dargestellten Fahrzeugsitzes aufweist. Während der Beckengurtabschnitt 60 eines fahrzeugseitigen Sicherheitsgurtsystems in die sitzflächenseitig am Grundrahmen 51 bzw. am Bügel 52 ausgebildete Halterung 34 eingelegt ist, weist der Bügel 52 oberhalb des Schwerpunktes der Sitzschale 11 eine Führung 53 zur Aufnahme des Schultergurtabschnittes 61 des fahrzeugseitigen Sicherheitsgurtsystems auf. Die Führung 53 ist um ein Maß "B" von dem Bügel 52 beabstandet, wobei der Abstand durch Einschaltung eines Kastens 54 eingerichtet ist; der Kasten 54 weist sitzschalenseitig Laschen 55 zur Aufnahme des Schultergurtabschnittes 61 auf. Der Kasten 54 kann dabei als einfache Ablagefläche ausgebildet sein oder aber auch als verschließbarer Behälter, in den für die Betreuung des Kindes erforderliche Utensilien einlegbar sind.

Mit dervorstehend beschriebenen Anordnung ist das Anlegen des fahrzeugseitigen Sicherheitsgurtes wesentlich einfachergegenüber bekannten Kindersitzen, bei denen der Schultergurt an der Rückenlehne der Sitzschale jeweils in die gesonderte Führung eingelegt werden muß.

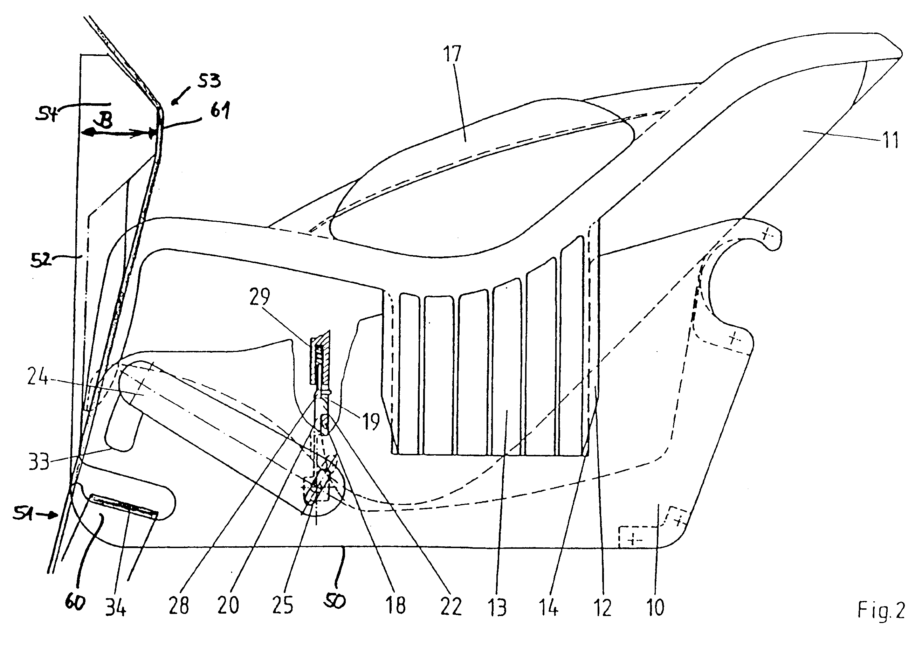

In Figur 2 ist ein Ausführungsbeispiel der Erfindung beschrieben, bei welchem die Sitzschale 11 von dem Untergestell 10 lösbar und mittel einer Verriegelungseinrichtung in diesem gesichert ist. Dabei weist das Untergestell 10 zur Zentrierung beim Einsetzen der Sitzschale 11 vorgesehene seitliche Überstände 12 auf, wobei die Sitzschale 11 mit Seitenwangen 13 in eine Führung 14 des Untergestells 10 eingreift. Die Sitzschale 11 weist einen ihr eigenen Anschnallgurt mit einem Gurtschloß sowie seitliche Tragegriffe 17 auf.

In symmetrischer Anordnung ist zu beiden Seiten der Sitzschale 11 bzw. des Untergestells 10 jeweils eine Verriegelungsvorrichtung für die Sitzschale in dem Untergestell angeordnet, welche gemäß nachfolgender Beschreibung jeweils ausgebildet ist.

An der Sitzschale 11 ist ein zungenartiger Halter 18 mit einer Verriegelungsöffnung 19 angebracht, der in eine am Untergestell 10 ausgebildete Verriegelungseinrichtung eintaucht. Diese besteht aus einem am Untergestell 10 drehbar gelagerten Riegel 20 mit einem Verriegelungsvorsprung 22, welcher bei eingesetzter Sitzschale 11 in die Verriegelungsausnehmung 19 des sitzschalenseitigen Halters 18 eingreift. Der Riegel 20 ist mittels einer Feder in seine Verriegelungsstellung belastet,

Am Untergestell 10 ist schwenkbar ein Betätigungshebel 24 angeordnet, welcher mit einem Mitnehmer 25 auf den Riegel 20 einwirkt. Der Hebel 24 ist in seiner Ruhestellung durch eine Feder belastet und so angeordnet, daß er bei seiner Verschwenkung bis zu einem Anschlag 33 den Riegel 20 über einen Mitnehmer 25 aus dem Eingriff in die Verriegelungsöffnung 19 des Halters 18 herausbewegt. Da auf beiden Seiten der Sitzschale 11 bzw. des Untergestells 10 jeweils ein Betätigungshebel 24 vorgesehen ist, sind die beiden Hebel 24 durch eine Querstange miteinander verbunden, damit die Betätigung nur eines Hebels 24 die auf beiden Seiten des Sitzes 10, 11 notwendige Entriegelung der Verriegelungseinrichtung herbeiführt.

Zur Sicherung der Verriegelungsstellung des Riegels 20 im Halter 18 ist am Halter 18 noch ein Sicherungsschieber 28 angeordnet, der mittels einer Feder 29 in seine untere Ruhestellung belastet ist, wobei sich die Feder 29 an der Sitzschale abstützt. Der Schieber 28 ist mittels eines in die Verriegelungsöffnung 19 eingreifenden Steges geführt und weist einen vom Halter 18 in Richtung auf den Riegel 20 des Untergestells 10 abstehenden Kopfteil auf. In seiner in Figur 2 darsgestellten oberen Endlage liegt der Kopfteil Schiebers 28 auf dem Riegel 20 auf und sichert diesen somit in der Verriegelungsstellung.

Aufgrund der vorstehend mit ihren Einzelteilen beschriebenen Verriegelungseinrichtung erfolgt die Verriegelung der Sitzschale 11 in dem Untergestell 10 beim Einsetzen selbsttätig; zum Herausnehmen der Sitzschale 11 aus dem Untergestell 10 ist eine Betätigung der Verriegelungseinrichtung durch den bzw. die Hebel 24 erforderlich, welche die Verriegelungseinrichtung lösen, wonach die Sitzschale 11 aus dem Untergestell 10 herausnehmbar ist.

Wie sich aus der Zeichnung weiterhin entnehmen läßt, kann die Sitzschale 11 auch ohne Hinzunahme des Untergestells 10 im Fahrzeug festgelegt werden, indem Beckengurtabschnitt 16 und Schultergurtabschnitt 61 zu einem einzigen Gurtabschnitt zusammengefaßt und durch die Tragegriffe 17 der Sitzschale 11 hindurchgeführt werden, so daß der aus Beckengurt und Schultergurt bestehende eine Gurtabschnitt die Sitzschale 11 übergreift und am Fahrzeugsitz sicher festlegt. Auch hiermit ist eine besonders einfache und sichere Handhabung der Sitzschale 11 im Fahrzeug verbunden.

## Patentansprüche

1. Kinder-Sicherheitssitz zur Verankerung an einem aus Beckengurt (60) und Schultergurt (61) bestehenden Sicherheitsgurtsystem in Kraftfahrzeugen, mit einem mit dem Beckengurt (60) des Sicherheitsgurtes zu halternden Untergestell (10) und mit einer damit verbundenen Sitzschale (11), die einen integrierten Sicherheitsgurt zur Sicherung des Kindes aufweist, wobei das Untergestell (10) am Fußende der Sitzschale (11) einen im wesentlichen vertikal aufstehenden Bügel (52) aufweist, der zur Anlage an der Rückenlehne des Fahrzeugsitzes eingerichtet ist und an dessen Fuß sitzflächenseitig der Beckengurt das Untergestell (10) hält, dadurch gekennzeichnet, daß der Bügel (52) oberhalb des Schwerpunktes der Sitzschale (11) ein eine Führung (53) für den Schultergurt (61) ausbildendes Bauteil (54) aufweist, wobei die Führung (53) für den Schultergurt (61) an dem Bauteil (54) um ein Maß (B) von dem Bügel (52) in Richtung auf die Sitzschale (11) beabstandet ist.

2. Kinder-Sicherheitssitz nach Anspruch 1, dadurch gekennzeichnet, daß das Bauteil (54) als mit dem Bügel (52) in dessen oberem Bereich verbundener Kasten ausgebildet ist und daß die Führung (53) für den Schultergurt (61) an der sitzschalenseitigen Fläche des Kastens (54) ausgebildet ist.

3. Kinder-Sicherheitssitz nach Anspruch 2, dadurch gekennzeichnet, daß an dem Kasten (54) als Führung (53) für den Schultergurt (61) sitzschalenseitig Laschen (55) zur Aufnahme des Schultergurtes (61) ausgebildet sind.

4. Kinder-Sicherheitssitz nach einem der Ansprüche 1 bis 3, dadurch gekennzeichnet, daß die Sitzschale (11) mit dem Untergestell (10) einstückig ausgebildet ist.

5. Kinder-Sicherheitssitz nach einem der Ansprüche 1 bis 3, dadurch gekennzeichnet, daß die Sitzschale (11) von dem Untergestell (10) lösbar und über eine Verriegelungseinrichtung in dem Untergestell (10) gesichert ist.

## Claims

1. Child's safety seat to be anchored to a safety belt system of a motor vehicle, having a pelvic belt (60) and a shoulder belt (61), that comprises an under frame (10) which is secured by the pelvic belt (60) of the safety belt and a seat shell (11) connected therewith which is provided with an integrated safety belt for securing the child, and an essentially vertically extending hoop (52) provided at the foot end of the seat shell (11) which is adapted to rest at the back rest of the vehicle seat whereby the pelvic belt secures the under frame (10) at the side which is facing the seat surface, characterized in that the hoop (52) is provided with a structural member (54) above the center of gravity of the seat shell (11) having a guide (53) for the shoulder belt (61), the guide (53) of the shoulder belt (61) at the structural member (54) being spaced at a distance from the hoop (52) by an amount (B) in the direction towards the seat shell (11).

2. A child's seat according to claim 1, characterized in that the structural member (54) is formed as a box being connected with the hoop (52) in its upper section and that the guide (53) for the shoulder belt (61) is provided at a side of the box (54) facing the seat shell.

3. A child's seat according to claim 1 or 2, characterized in that the box (54) at its side facing the seat shell as the guide (53) for the shoulder belt (61) is provided with flaps (55) for receiving the shoulder belt (61).

4. A child's seat according to one of the claims 1 to 3, characterized in that the seat shell (11) and the under frame (10) are formed as one piece.

5. A child's seat according to one of the claims 1 to 3, characterized in that the seat shell (11) is removable from the under frame (10) and is secured via a locking device to the under frame (10).

## Revendications

1. Siège de sécurité pour enfant, destiné à être fixé par un système de ceinture de sécurité, composé d'une ceinture de bassin (60) et d'une ceinture d'épaule (61) dans des véhicules automobiles, avec un bâti inférieur (10), devant être maintenu à l'aide de la ceinture de bassin (60) de la ceinture de sécurité et une coque de siège (11), reliée au bâti, présentant une ceinture de sécurité intégrée, pour assurer l'enfant, le bâti inférieur (10) présentant à l'extrémité de pied de la coque de siège (11) un étrier (52) montant pratiquement verticalement, agencé pour l'appui au dossier du siège de véhicule et au pied duquel, du côté de la surface d'assise, la ceinture de bassin maintient le bâti inférieur (10), caractérisé en ce que l'étrier (52) présente, au-dessus du centre de gravité de la coque de siège (11), un élément de construction (54), constituant un guidage (53) pour la ceinture d'épaule (61) . le guidage (53) destiné à la ceinture d'épaule (61) étant décalé sur l'élément de construction (54) d'une distance (B), par rapport à l'étrier (52), en direction de la coque de siège (11).

2. Siège de sécurité pour enfant selon la Revendication 1., caractérisé en ce que l'élément de construction (54) est réalisé sous forme de boîte reliée à l'étrier (52), dans sa zone supérieure, et en ce que le guidage (53) destiné à la ceinture d'épaule (61) est réalisé sur la surface de la boîte (54) située du côté de la coque de siège.

3. Siège de sécurité pour enfant selon la Revendication 1 ou 2, caractérisé en ce que des attaches (55), destinées à recevoir la ceinture d'épaule (61), sont ménagées sur la boîte (54), côté coque de siège, formant des guidages (53) pour la ceinture d'épaule (61).

4. Siège de sécurité pour enfant selon l'une des Revendications 1 à 3, caractérisé en ce que la coque de siège (11) est réalisée d'une seule pièce avec le bâti inférieur (10).

5. Siège de sécurité pour enfant selon l'une des Revendications 1 à 3, caractérisé en ce que la coque de siège (11) est désolidarisable du bâti inférieur (10) et fixée dans le bâti inférieur (10), par l'intermédiaire d'un dispositif de verrouillage.
